# EUROPEAN PATENT SPECIFICATION

(11) **EP 4 092 560 B1**
(45) Date of publication and mention of the grant of the patent: **02.09.2026**
(21) Application number: 21175084.9
(22) Date of filing: 20.05.2021
(51) Int. Cl.: G06F 30/20, B33Y 50/00, G06F 113/10, G06F 119/04

(54) **A METHOD FOR THREE-DIMENSIONAL PRINTING WITH SURFACE DITHERING, A COMPUTER PROGRAM PRODUCT AND A 3D PRINTING DEVICE**
VERFAHREN FÜR DREIDIMENSIONALES DRUCKEN MIT OBERFLÄCHEN-DITHERING, COMPUTERPROGRAMMPRODUKT UND 3D-DRUCKER
PROCÉDÉ D'IMPRESSION TRIDIMENSIONNELLE AVEC JUXTAPOSITION DE SURFACE, PRODUIT PROGRAMME INFORMATIQUE ET DISPOSITIF D'IMPRESSION 3D

(43) Date of publication of application: 23.11.2022
(73) Proprietor: Fraunhofer-Gesellschaft zur Förderung der angewandten Forschung e.V., 80686 München (DE)
(72) Inventor: Brunton, Alan, 38000 Grenoble (FR); Urban, Philipp, 64342 Seeheim (DE); Morsy, Mostafa, 64293 Darmstadt (DE)
(74) Representative: Ramrath, Lukas

(56) References cited:
- EP-A1- 1 442 870
- EP-A2- 2 930 694
- WO-A1-2020/219053
- WO-A2-2014/172687
- IN BAEK PARK ET AL: "Dithering method for improving the surface quality of a microstructure in projection microstereolithography", THE INTERNATIONAL JOURNAL OF ADVANCED MANUFACTURING TECHNOLOGY, SPRINGER, BERLIN, DE, vol. 52, no. 5 - 8, 19 June 2010 (2010-06-19), pages 545 - 553, XP019877318, ISSN: 1433-3015, DOI: 10.1007/S00170-010-2748-6
- BRUNTON A ED - BRUNTON A: "Pushing the limits of 3 D color printing: Error diffusion with translucent materials", ACM TRANSACTIONS ON GRAPHICS,, vol. 35, 1 December 2015 (2015-12-01), pages 4.1 - 4.13, XP002769512
- TIM KUIPERS ET AL: "Hatching for 3D prints: line-based halftoning for dual extrusion fused deposition modeling", ARXIV.ORG, CORNELL UNIVERSITY LIBRARY, 201 OLIN LIBRARY CORNELL UNIVERSITY ITHACA, NY 14853, 3 May 2018 (2018-05-03), XP080885448, DOI: 10.1016/J.CAG.2018.04.006
- A.O. AREMU ET AL: "A voxel-based method of constructing and skinning conformal and functionally graded lattice structures suitable for additive manufacturing", ADDITIVE MANUFACTURING, vol. 13, 1 January 2017 (2017-01-01), NL, pages 1 - 13, XP055482697, ISSN: 2214-8604, DOI: 10.1016/j.addma.2016.10.006
- PINTUS R ET AL: "Shape enhancement for rapid prototyping", THE VISUAL COMPUTER ; INTERNATIONAL JOURNAL OF COMPUTER GRAPHICS, SPRINGER, BERLIN, DE, vol. 26, no. 6-8, 14 April 2010 (2010-04-14), pages 831 - 840, XP019845860, ISSN: 1432-2315

## Description

The invention relates to a method for three-dimensional printing, a computer program product and a 3D printing device as defined by the independent claims 1, 15 and 14, accordingly.

In 3D printing, it is desirable to reproduce an appearance of an object model as far as possible. Besides a color reproduction and/or a translucency reproduction, it is also desired to reproduce the shape of the model as far as possible.

With respect to the reproduction quality, two phenomenon can be observed.

First, the voxel resolution of binary 3D printers (such as material jetting printers) defines the upper limit of geometric accuracy since just the whole volume of the voxel can be filled with build material or left empty. Resulting quantization errors between the input surface and the voxel surface may (and mostly) include edges, i.e., the quantization signal on the surface contains directional high-frequency components. Since most 3D printing systems employ anisotropic voxels, the magnitude of quantization errors depends on the surface orientation. The directional, surface-orientation-dependent quantization errors yield staircasing artifacts in the final 3D printing object. These artifacts can be visually disturbing when viewed at close range in particular for small objects due to the low signal-to-noise-ratio. But also for larger objects viewed from a bigger distance they can create unwanted specular highlights at surfaces viewed under off-specular conditions.

In addition to visual effects, staircasing artifacts adversely affect the fatigue behavior of an object. This is because staircases or small cracks of the surface can be seeds for ruptures. Second, a voxel representation is just an idealistic model of material placement. In addition to droplet-positioning noise and pre-cured material mixing in the case of printing by material jetting, it is possible that dots are placed in interlaced patterns with considerable overlap between voxels resulting in material cross-contamination between neighboring voxels. This can be desired or even necessary to ensure structural integrity of the print. Furthermore, the correct height along a vertical axis can be enforced by leveling mechanisms via a roller or a squeegee, which may squeeze excess material into neighboring voxels. The result is a thickened print in directions perpendicular to the vertical axis. Furthermore, build and support material may mix at vertical surfaces before curing so that not all support material can be removed in the cleaning process, which further contributes to the thickening effect.

It is known that, in order to obtain pleasant surfaces, staircase artifacts are removed mechanically in a costly post-process by sanding or polishing.

The US 7,658,976 B2 discloses apparatuses and methods useful in three-dimensional object printing. It is proposed to slice in double resolution for the dimension where the printer resolution is the lowest and use an interlacing approach to reduce the output back to the printer resolution. This is a directional geometric dither that is, however, limited to distinct surface orientations. Furthermore, it is computationally expensive since the number of addressed voxels doubles.

In order to correct the thickening, different approaches are applied which comprise
a. Mechanically by sanding or polishing.
b. Altering the input 3D model my making the parts thinner so that after the process-based thickening the part has the desired thickness.
c. Eroding each slice by morphological operators.

US 2018/0281291 A1 discloses a 3D object forming device and a 3D object forming method, in particular to a halftone processing on the formation data using a dithering method.

US 7,658,976 B2 discloses apparatuses and methods useful in three-dimensional object printing.

EP 1 442 870 A1 discloses a method of producing an object through solid freeform fabrication by varying a concentration of ejected material applied to form a particular object layer.

WO 2014/172687 A2 discloses a programmable pipeline for synthesis of multi-material 3D printed objects supports procedural evaluation of geometric detail and material composition, using program modules allowing models to be specified easily and efficiently.

The document IN BAEK PARK ET AL: "Dithering method for improving the surface quality of a microstructure in projection microstereolithography", THE INTERNATIONAL JOURNAL OF ADVANCED MANUFACTURING TECHNOLOGY, SPRINGER, BERLIN, DE, vol. 52, no. 5 - 8, 19 June 2010(2010-06-19), pages 545-553, XP019877318, ISSN: 1433-3015, DOI: 10.1007/S00170-010-2748-6 discloses a dithering method for improving the surface quality of a microstructure in projection microstereolithography.

WO 2020/219053 A1 discloses a method of compensating for dimensional variation in 3D printing which includes receiving a voxel space model that represents a 3D object to be printed within a build volume of a 3D printing system, asymmetrically eroding voxels from the voxel space model, and printing the 3D object based on the asymmetrically eroded voxel space model.

There is the technical problem of providing a method for three-dimensional printing, a computer program product and a 3D printing device which enable an improved reproduction of an object to be printed, in particular an improved reproduction with improved durability.

The solution to said technical problem is provided by the subject-matter with the features of the independent claims. Advantageous embodiments are provided by the subject-matter with the features of the remaining sub claims.

A method for three-dimensional printing is proposed. The method comprises the steps of
- dithering a surface of the printing object (dithering step),
- printing the printing object with the dithered surface (printing step).

The printing process can comprise the generation of successive slices, i.e. layers, which are oriented perpendicular to a vertical axis (z - axis). Such a slice can also be referred to as z-slice. The z-slices can be oriented parallel to a plane spanned by a longitudinal axis (x - axis) and lateral axis (y - axis). Such a slice can also be referred to as x, y - slice. The mentioned axes can provide axes of a reference coordinate system, in particular of a printing space or build space coordinate system. A z-slice therefore denotes a two - dimensional cross section of the printing object, e.g. with predetermined thickness, wherein the section plane is perpendicular to the aforementioned vertical direction.

Before performing the dithering step, e.g. in a modelling step, a model of the 3D printing object can be created, e.g. by computer added design (CAD). The modelling step can be part of the claimed method. Such a model can also be generated by 3D - scanning, in particular by capturing shape, color and translucency information of an object which is to reproduced by printing.

The model can encode reproduction information, wherein a reproduction information can denote or comprise a shape information, color information and/or translucency information. These pieces of information provide a specification of what shape, color and/or translucency perception from the printing object a user wishes to have. In other words, the information encodes set values for the shape, color and/or translucency of the printing object.

The modelling step can be performed independent of the 3D printing device which is to be used.

By said modelling step, input data for the proposed method can be generated. The input data can encode shape information as texture information or vertex information. Further, color and translucency information can be encoded by a RGBA signal on the object's surface, for example in form of a RGBA texture or per-vertex RGBA attributes. An RGBA signal can e.g. be provided by a RGBA vector, wherein entries of the "RGB" portion encode a color information and the entry of the "A" portion encodes a translucency information. Thus, a desired color and translucency can be assigned to the printing object or parts thereof. The input data can be generated independent of a 3D printing device. Examples for a possible data format of input data is the so-called .obj data format, the .wrl data format or the .3mf data format whereas the color and translucency is embedded in such formats as a RGBA texture file encoded e.g. in a PNG data format or a TIFF data format. For example, the .3mf data format is created to store textured 3D models for 3D printing by an industrial consortium.

Preferably, the reproduction information can be provided by a texture image, wherein every point or selected points on a 3D surface representation of the printing object has assigned coordinates in the domain of a texture image.

Based on the said input data, control data for a 3D printing device can be generated, wherein the control data is used to control the printing process. Control data can e.g. be generated based on data generated in the dithering step and/or in the erosion step which will be explained later.

The 3D printing process can e.g. be an extrusion-based process, a wire-based process, a granular-based process, a power-bed process or a lamination-based process. Preferably, the 3D printing process comprises a material jetting process with a subsequent polymerisation. In such processes, one or more liquid printing materials, e.g. liquid photo polymers, are applied into or onto a layer and exposed to radiation, e.g. to a laser beam, in order to harden to exposed printing material. For example, printing materials can be provided by printing inks, wherein the printing inks can be hardened or cured after the application on to or into a layer, e.g. by exposure to light, in particular to UV radiation. The printing inks can have different colors and/or degrees of translucency. The process can also be referred to as polyjetting which is also known as multi-jet modelling.

According to the invention, the dithering step comprises
- determining the set surface of the printing object,
- providing a spatially high-frequent dithering signal,
- modifying the set surface as a function of the dithering signal.

The set surface can be determined in a reference coordinate system, in particular in a voxel grid coordinate system and/or a build space coordinate system. The set surface can denote a course or shape of the set surface. The printing object is the object to be printed according to the proposed method.

The spatially high-frequent signal is a spatially varying signal, wherein a DC or steady component is zero or not higher than a predetermined threshold value. The spatially high-frequent signal can also denote a spatially varying signal, wherein a spectral density of a low frequency portion is smaller than a spectral density of a high frequency portion. The low frequency portion comprises frequencies ranging from 0 to a threshold frequency (inclusive). The high frequency portion comprises frequencies ranging from the threshold frequency (exclusive). The threshold frequency can be determined as a predetermined fraction of a predetermined maximum spatial frequency, e.g. as 10%, 20%, 50%, 70% fraction. The maximum spatial frequency can be a printer-specific frequency and can in particular depend on the voxel resolution of the printer or the voxel size which can be achieved with the printer. In particular, the maximum spatial frequency can be the inverse of the smallest voxel dimension.

The dithering signal can be a multidimensional signal, e.g. defined in relation to the reference coordinate system. In this case, the dithering signal can be defined such that a signal course along each spatial direction within the reference coordinate system is a spatially high-frequent signal. Preferably, the dithering signal is provided by a three-dimensional matrix, wherein values of the elements of the matrix provide signal values of the dithering signal. Values of elements can e.g. be in the range from 0 (inclusive) to 1 (inclusive) or from -0.5 (inclusive) to 0.5 (inclusive). In this case, the signal values of the elements along each signal path, i.e. a signal path with an arbitrary orientation, through the matrix will provide a spatially high-frequent signal.

The dithering signal can in particular be a blue noise signal or can be determined as a function of a blue noise signal. A blue noise signal or characteristics of a blue noise signal are e.g. defined in Daniel L. Lau and Gonzalo R. Arce, Modern Digital Halftoning, Second Edition, 2008, Taylor & Francis Group, LLC, ISBN 978-1-4200-4753-0, in particular on the page 80 and 81 of said document with further references. Such a definition is therefore incorporated by reference into this disclosure.

Modification of the set surface as a function of the dithering signal provides a modified, dithered surface. In other words, the location of points on the set surface is changed as a function of the dithering signal. It is e.g. possible that the surface is modulated by the dithering signal. It is further possible that to each or selected points of a surface, a signal value of the dithering signal is assigned, wherein a position of a selected point is changed as a function of the signal value. It is e.g. possible that the position is shifted, in particular along a surface normal, of the selected point by the signal value or a scaled signal value.

It is also possible to modify the classification of voxels as surface voxels as a function of the dithering signal, wherein the surface voxels are voxels intersected by the input model's surface. This means that after the dithering step, other voxels are classified as surface voxels than before the dithering step.

As a result of the dithering, a spectral density of a low frequency portion of a quantization error signal will decrease, wherein a spectral density of a high frequency portion of the quantization error signal will increase. Again, the low and the high frequency portion can be divided by a threshold frequency, e.g. the aforementioned threshold frequency.

During a voxelization, voxels of the build space are classified as object voxels or non-object voxels. A subset of the object voxels can be denoted as surface voxels, wherein a surface voxel can denote a voxel which is intersected by the (set) surface.

The quantization error can denote a distance between a center of a surface voxel and the set surface along a surface normal which intersects the center. The quantization error signal can comprise said error value for each surface voxel.

In the case that no dithering step is applied, the surface can comprise the aforementioned staircaising artifacts. Such artifacts comprise, in addition to high-frequency components, a low frequency component. In other words, the quantization error signal of a non-dithered object will have or likely have such a low frequency component. Due to physical effects, e.g. the flow of printing material after application, the printing process has a low pass filter effect. While this low pass filter effect will eliminate or at least reduce the high frequency components of the quantization error, low frequency components may not or not significantly be affected. The dithering step (which shifts frequency components from the low frequency portion to the high frequency portion) will thus provide a quantization error signal with less low frequency components (which then pass the printing process-related low pass filter).

As an advantageous result, the surface dithering reduces or even removes staircasing artifacts, in particular the low frequency components, independently of their orientation and creates a smoother surface without costly and time consuming manual post-process such as sanding. Thus, the proposed method allows to create printing objects that are visually more pleasing than printing objects without surface dithering, i.e. an improved reproduction of an object to be printed.

Further, the proposed method advantageously allows the creation of printing objects which are more stable or durable due to the smoother surface because the notch effect is reduced. Further, a surface quality in three-dimensional printing is improved.

Since the proposed algorithm is a point process (neighborhood information is not required) it is also extremely fast so that the computing time is negligible within the full 3D printing pipeline - which makes it in particular suitable for mass production.

In a preferred embodiment, the dithering step further comprises
- determining a voxel grid of a bounding box of the printing object or a portion thereof,
- determining a voxel-specific surface distance information for each voxel of the bounding box or for selected voxels of the bounding box, wherein the voxel-specific surface distance information represents a distance between the voxel and the set surface,
- modifying the surface distance information as a function of the dithering signal,
- determining the modified surface depending on the modified surface distance information or classifying object voxels and non-object voxels based on the modified surface distance information.

The bounding box can comprise voxels which are occupied by the printing object, i.e. object voxels, as well as voxels which are not occupied by the printing object, i.e. non-object voxels. The bounding box can have any shape, preferably a cuboid shape. The voxel grid can be provided according to the printer resolution. This can mean that the size of a voxel is set according to the printer resolution. The bounding box comprise the complete build space or, preferably, a subspace thereof.

The voxel-specific surface distance information can be or represent a distance between a voxel center and the surface. The distance information can be provided by a numerical value.

For a surface voxel, said distance can be the distance along a surface normal which intersects the voxel center. This distance can also be referred to as sub voxel offset.

For an object voxel which is not a surface voxel, i.e. an inner voxel, the distance can be calculated as the sum of the distance of the selected voxel to its nearest surface voxel and the distance of the voxel center of the nearest surface voxel to the surface measured along a surface normal which intersects the voxel center of said nearest surface voxel.

The determination of the distance between a voxel and a surface of the printing object is e.g. outlined in the document A. Brunton et. al., "Displaced Signed Distance Fields for Additive Manufacturing", ACM Transactions on Graphics (Proc. SIGGRAPH) Volume 40 Issue 4, August 2021, in particular in section 4 of said document. An exemplary determination is also disclosed in the post published DE 10 2020 215 766.9. It is, however, clear to the skilled person that other distance determination methods can be applied.

The distance information can preferably be determined as a signed distance information. In this case, a negative distance can indicate the interior of the printing object, i.e. an object voxel, wherein a positive distance indicates the exterior of the printing object, i.e. a non-object voxel, or vice versa.

Modification of the surface distance information as a function of the dithering signal can e.g. be performed by changing the surface distance information, in particular the distance value, as a function of a dithering signal value. It is e.g. possible that the dithering signal value or a scaled dithering signal value is added to the surface distance information or subtracted from the surface distance information. In other words, a modified or updated set of surface distance information can be determined.

After having modified the distance information, a modified surface depending on the modified surface distance information can be determined. It is e.g. possible to determine the locations of zero crossing of a signed distance information in the set of voxels for which the modified distance information was determined, e.g. in the reference coordinate system. Such locations are located on the modified, dithered surface. In other words, the modified surface is defined by the zero crossings. If the modified surface is determined, the classification of object voxels, in particular surface voxels, can be updated. In particular, voxels intersected by the modified surface can be classified as updated surface voxels. Further, inner voxels and also non-object voxels can be classified as a function of the modified surface, e.g. by methods known to the skilled person.

Alternatively, is it possible to classify object voxels and non-object voxels based on the modified surface distance information. Such a classification can e.g. be performed by a threshold-based approach, wherein voxels with a distance smaller than or equal to a distance threshold value are classified as object voxels and voxels with a distance larger than the threshold value are classified as non-object voxels. The threshold value can depend on the voxel size, in particular the voxel size along a certain direction. Preferably, the threshold value is half of the voxel size along a surface normal which intersects the voxel center of the voxel in case of a surface voxel the voxel center of the nearest surface voxel in case of a non-surface voxel. Alternatively, the threshold value can be zero or can be determined as a function of the voxel size, in particular of the voxel size along a selected axis of the reference coordinate system or of the maximal voxel size or minimal voxel size along an axis.

In other words, a distance-based dithering is performed, wherein a voxel-specific distance to the surface information can be determined and be modified as a function of the dithering signal. Further, a dithered surface can be determined depending on the modified surface distance information. Alternatively, or in addition, classifying object voxels and non-object voxels based on the modified surface distance information can be performed.

Determining a modified, dithered surface based on the distance information advantageously allows a computationally effective and fast determination, i.e. a determination which requires low computing time and low computing power, in particular if performed with a computing device such as a microcontroller or an integrated circuit.

In a further embodiment, the dithering step further comprises
- providing a three-dimensional dithering mask,
- determining, for each voxel of the bounding box or for selected voxels of the bounding box, a voxel-specific distance modifying value as a function of at least one entry of the dithering mask, and modifying the voxel-specific distance information as a function of the distance modifying value.

The three-dimensional dithering mask can be the aforementioned three-dimensional matrix with values of the elements of the matrix provide signal values of the dithering signal. Each element of the dithering mask can be assigned to one voxel of the bounding box or to one of the selected voxels.

It is e.g. possible to provide a dithering mask with the same dimension as the bounding box and/or with a number of elements equal to the number of voxels of the bounding box and to assign an element i, j, k of the mask to the voxel i,j,k of the bounding box with i, j, k providing element indices. In order to provide a dithering mask with a set dimension, it is possible to first determine a reference dithering mask with smaller dimensions and then to attach multiple reference dithering masks to each other in order to provide the dithering mask with the set dimension.

In particular, the dithering mask can be a blue noise mask. An exemplary determination of such a mask is e.g. outlined in the document Robert A. Ulichny, 1993, "Void-and-cluster method for dither array generation", In: Human Vision, Visual Processing and Digital Display IV, Vol. 1913. International Society for Optics and Photonics, 332-343.

Modification of the voxel-specific surface distance information as a function of the distance modifying value can e.g. be performed by changing the voxel-specific surface distance information, in particular the distance value, as a function of modifying value. It is e.g. possible that the modifying value or a scaled modifying value is added to the voxel-specific surface distance information or subtracted from the voxel-specific surface distance information. In other words, a modified or updated set of voxel-specific surface distance information can be determined which can also be referred to as updated distance field.

After having modified or updated the voxel-specific distance information, a modified surface can be determined as outlined above. Alternatively, an updated classification of object voxels and non-object voxels based on the modified surface distance information can be performed as outlined above.

Determining a modified, dithered surface using a three-dimensional dithering mask allows a computationally effective and fast determination.

In a further embodiment, one mask element is assigned to each voxel of the bounding box or to the selected voxels of the bounding box, wherein the voxel-specific distance modifying value for a selected voxel is determined as the value of the mask element which is assigned to the selected voxel. Preferably, however, the voxel-specific distance modifying value for a selected voxel is determined as the value of the mask element which is assigned to the nearest surface voxel of the selected voxel. An exemplary determination of the nearest surface voxel is e.g. described in EP 3 313 057 A1, in particular in [0122] ff. of EP 3 313 057 A1 with further references

In particular, the nearest surface voxel can denote the voxel which is the closest surface voxel to the respective voxel of the interior voxel set. In other words, a distance according to a predetermined distance metric from the respective interior voxel to its nearest surface voxel is smaller than or equal to the distances from the respective voxel to all other surface voxels. If more than one surface voxel qualifies as nearest surface voxel, a tie-breaking algorithm can be applied in order to determine the nearest surface voxel from the set of nearest surface voxel candidates.

Such a determination of the distance modifying value allows a computationally effective and fast determination of the modified surface.

In a further embodiment, one mask element is assigned to each voxel of the bounding box or to the selected voxels of the bounding box, wherein the voxel-specific distance modifying value for a selected voxel is determined as a projection value resulting from one or multiple projection(s) of the values of the mask elements to the selected voxel (or to the mask element which is assigned to the selected voxel).

A projection value resulting from a single projection can e.g. denote a value which is determined as a function of the values of all mask elements which are intersected by a straight line which intersects the selected voxel (or the mask element assigned to the selected voxel) with a predetermined orientation, e.g. an orientation such that the line is parallel to a surface normal in the point of intersection with the surface. In this case, the projection value can e.g. be an average value of the values of all intersected mask elements. However, other relationships between the projection value and the values of the mask elements can also apply.

A (fused) projection value resulting from multiple projections can e.g. denote a value which is determined as a function of multiple projection values each resulting from a single projection, wherein the projection-specific lines are preferably parallel but intersect different points of the selected voxel. It is e.g. possible that a projection-specific line of a first single projection intersects the center of the voxel and a projection-specific line of a further single projection intersects an edge point of the selected voxel. The fused projection value can e.g. be an average value of the said multiple projection values. However, other relationships between the fused projection value and the set of multiple projection values can also apply.

Such a determination of the distance modifying value advantageously improves the high-frequency characteristics used for surface dithering and therefore further improves the quality of reproduction and the durability.

In a further embodiment, the voxel-specific distance modifying value is scaled by a scaling factor which is determined as a function of a voxel size. The voxel size can be determined as the length of a line segment lying within the voxel and being a segment of the line, which intersects the voxel center and which is parallel to the surface normal.

as half of the size of the voxel along the surface normal which intersects the voxel center. This advantageously allows to take into account anisotropic voxel dimensions.

Alternatively or in addition, the voxel-specific distance modifying value is scaled by a scaling factor which is determined as a function of a selected printer. Such a scaling factor can e.g. be determined by printing multiple printing objects, e.g. spheres or other shapes, according to the proposed method with different scaling factors and then select the scaling factor for which the smallest quantization-induced artifacts are provided as the printer-specific scaling factor.

Such artifacts can e.g. be determined by measuring the surface profile of the printing object after printing, e.g. with known metrology systems and methods, and determining the deviation between the set surface and the printed surface as artifacts. The set surface is determined based on the model of the printing object.

Further, the quantization-induced staircasing artifacts can be identified as deviations which occur for every orientation of the surface. In contrast to quantization-induced staircasing artifacts, printing process-induced staircaising artifacts occur only for one specific orientation of the surface, in particular the z-direction. More particular, the low frequency portion (see above) of the quantization- induced artifacts is not restricted to a single spatial direction (which is the fact for process induced artifacts). Consequently, the quantization-induced staircasing artifacts can be identified as deviations for which a low frequency portion exists in all spatial directions and not only in one specific spatial direction. The scaling factor can thus be selected such that the outlined quantization-induced staircasing artifacts are minimized.

Alternatively, quantization artifacts can be identified by visual inspection.

This advantageously allows to take into account printer-specific characteristics.

In an alternative embodiment, the dithering step further comprises
- determining a voxel grid of a bounding box of the printing object or a portion thereof,
- classifying voxels which are intersected by the set surface as surface voxels,
- modifying the surface voxel classification as a function of the dithering signal.

It is e.g. possible to determine, at least for each surface voxel, a voxel-specific surface distance information, wherein the voxel-specific surface distance information represents a distance between the voxel and the surface of the printing object. This has been explained before. Further, the voxel-specific surface distance information can be modified as a function of the dithering signal, in particular as a function of a voxel-specific distance modifying value which is determined as a function of at least one entry of the dithering mask (see above). Then, the surface voxel classification can be updated as a function of the set of the modified voxel-specific surface distance information. Such an update can e.g. be performed by displacing the surface at each surface voxel by the modified voxel-specific surface distance information along the surface normal. Voxels which are intersected by the displaced surface are classified as updated surface voxels. The update can be performed before or after a printing material is assigned to the voxels. A printing material can be assigned to a voxel by a halftoning process or by any other suitable process.

This advantageously provides an alternative of modifying the set surface as a function of the dithering signal which also allows a fast and computationally efficient determination.

In a further embodiment, the method further comprises the step of
- eroding the surface of the printing object.

Said erosion step is performed in order to correct for the thickening effect described before. Thus, a geometric accuracy in three-dimensional printing is improved.

The erosion step is performed slicewise, e.g. for all slices, or for a subset of all slices, in particular z-slices, of the printing object.

Preferred embodiments of the erosion step will be outlined below. In contrast to these embodiments, erosion can be performed by applying a morphological erosion operation. Such an operation is e.g. described in the textbook Shih, Frank Y., Image processing and mathematical morphology: Fundamentals and Applications, CRC press, 2009, in particular on pages 17 to 20 of said textbook.

It is also possible to perform a distance-based erosion. In this case, a voxel-specific distance to the surface information can be determined, at least for each surface voxel or for all voxels of the selected z-slice or of the (three-dimensional) voxel grid. Then, the voxel-specific surface distance information can be modified as a function of a, in particular predetermined, more particular constant, erosion value. Further, an eroded surface can be determined depending on the modified surface distance information. Alternatively, or in addition, classifying object voxels and non-object voxels based on the modified surface distance information can be performed.

The voxel-specific surface distance information can be or represent a distance between a voxel center and the surface in the two-dimensional z-slice or in the three-dimensional space. The distance information can be provided by a numerical value.

Modification of the voxel-specific surface distance information as a function of the erosion value is performed by changing the surface distance information, in particular the distance value, as a function of the erosion value. It is e.g. possible that the (positive) erosion value is subtracted from the surface distance information. In other words, a modified or updated set of voxel-specific surface distance information can be determined.

After having modified the distance information, an eroded surface depending on the modified surface distance information is determined. It is e.g. possible to determine the locations of zero crossing of a signed distance information in the set of voxels for which the modified distance information was determined, e.g. in the reference coordinate system or the two-dimensional coordinate system of the z-slice. Such locations are located on the eroded surface. In other words, the eroded surface is defined by the zero crossings. If the eroded surface is determined, the classification of object voxels, in particular surface voxels, can also be updated. In particular, voxels intersected by the eroded surface can be classified as updated surface voxels. Further, inner voxels and also non-object voxels can be classified as a function of the eroded surface, e.g. by methods known to the skilled person.

Alternatively, is it possible to classify object voxels and non-object voxels based on the eroded surface distance information. Such a classification can e.g. be performed by a threshold-based approach, wherein voxels with a distance smaller than or equal to a distance threshold value are classified as object voxels and voxels with a distance larger than the threshold value are classified as non-object voxels. As explained before, the threshold value can depend on the voxel size.

The erosion step can preferably be performed before the dithering step. In this case, the eroded surface can provide the aforementioned set surface for the dithering step, i.e. the surface which is modified as a function of the dithering signal. It is, however, also possible that the erosion step is performed after the dithering step. In this case, the dithered surface can provide the set surface for the erosion step, i.e. the surface which is modified as a function of the erosion signal.

The thickening correction by performing the erosion step advantageously improves the geometric accuracy of printing objects. Particularly for thin structures the printing process-based thickening can be significant, e.g. up to 20% of the original thickness for a 2mm cylinder. High geometric accuracy is important for interlocking printing objects but it also improves the visual appearance of thin printing objects.

The erosion step according to one of the embodiments described herein can provide an independent invention and does not necessarily depend on the dithering step. Thus, a method for three-dimensional printing is described which comprises the steps of
- eroding a surface of the printing object (erosion step),
- printing the printing object with the eroded surface (printing step).

In a further embodiment, the erosion step comprises
- determining a surface of the printing object in a selected z-slice,
- determining a reference axis as a medial axis of the surface or a subset thereof,
- determining, for each or selected points of the surface, a distance to the reference axis and an erosion value as a function of said distance,
- modifying the surface depending on the erosion value.

Said erosion step can be performed for all or selected z-slices of the printing object, i.e. repeatedly.

A z-slice denotes a layer of the voxel grid comprising the printing object, wherein the voxel of said layer all have the same z-coordinate. In other words, the z-slice is a two-dimensional cross section through the voxel grid at a selected z-coordinate.

The medial axis denotes a set of object points which have more than one closest point on the surface. In this case, the medial axis denotes a set of object points in the two-dimensional z-slice which have more than one closest point on the two-dimensional surface in the z-slice.

The distance to the reference axis is determined as a distance in the z-slice, e.g. a dimension in a two-dimensional space. The distance can be a numerical value.

The erosion value can be determined by using a functional relationship or a predetermined assignment between the distance and the erosion value.

Modification of the surface depending on the erosion value can e.g. be done by shifting the selected surface point by the amount of the erosion value, in particular inwards, e.g. along the line with the shortest distance connecting the reference axis and the selected point or along the surface normal in the selected point.

Using the distance to the reference axis being the medial axis or a subset thereof advantageously allows to adapt the erosion to thin parts of the printing object. In particular if the erosion value is chosen to be zero if the distance to the reference axis is smaller than a predetermined distance threshold value, an undesired complete erosion can be prevented. This, in turn, allows to further improve a reproduction quality.

In a further embodiment, the erosion step comprises
- determining, at least for each surface voxel of the selected z-slice, a voxel-specific distance to the reference axis and an erosion value as a function of said distance,
- modifying the voxel-specific surface distance information as a function of the erosion value,
- determining the modified surface depending on the modified surface distance information or classifying object voxels and non-object voxels based on the modified surface distance information.

The erosion value which is determined as a function of the voxel-specific distance of a selected voxel can be assigned to said voxel. It is also possible that an erosion value is determined for each voxel of the voxel grid in the selected z-slice. In particular, the erosion value assigned to the nearest surface voxel can be assigned to a selected (object) voxel of the z-slice, in particular to a selected inner voxel.

The voxel-specific surface distance information can be or represent a distance between a voxel center and the surface in the two-dimensional z-slice. The distance information can be provided by a numerical value.

Modification of the voxel-specific surface distance information as a function of the erosion value can e.g. be performed by changing the surface distance information, in particular the distance value, as a function of the erosion value. It is e.g. possible that the (positive) erosion value is subtracted from the surface distance information. In other words, a modified or updated set of voxel-specific surface distance information can be determined.

After having modified the distance information, an eroded surface depending on the modified surface distance information can be determined. It is e.g. possible to determine the locations of zero crossing of a signed distance information in the set of voxels for which the modified distance information was determined, e.g. in the reference coordinate system or the two-dimensional coordinate system of the z-slice. Such locations are located on the eroded surface. In other words, the eroded surface is defined by the zero crossings. If the eroded surface is determined, the classification of object voxels, in particular surface voxels, can be updated. In particular, voxels intersected by the eroded surface can be classified as updated surface voxels. Further, inner voxels and also non-object voxels can be classified as a function of the eroded surface, e.g. by methods known to the skilled person.

Alternatively, it is possible to classify object voxels and non-object voxels based on the eroded surface distance information. Such a classification can e.g. be performed by a threshold-based approach, wherein voxels with a distance smaller than or equal to a distance threshold value are classified as object voxels and voxels with a distance larger than the threshold value are classified as non-object voxels. As explained before, the threshold value can depend on the voxel size.

Determining an eroded surface based on the distance information advantageously allows a computationally effective and fast determination, i.e. a determination which requires low computing time and low computing power.

In a further embodiment, the voxel-specific distance to the reference axis is determined as a function of the distance between the voxel center and the reference axis and the distance between the voxel center and the surface along the surface normal, in particular a surface normal which intersects the voxel center. This advantageously allows a computationally fast and effective determination of the voxel-specific distance.

In a further embodiment, the erosion value and the distance to the reference axis are positively correlated for at least one interval of distance values. This can mean that for at least one interval of distance values, the erosion value increases with increasing distance values.

A positive correlation can be provided by a linear relationship, a step-shaped relationship, a ramp-shaped relationship. It, is however, clear to the skilled person that also other relationships can apply.

Using a positive correlation advantageously improves the adaption of the erosion to thin parts of the printing object. This, in turn, allows to further improve a reproduction quality.

In a further embodiment, the erosion value is set to a minimal value if the distance to the reference axis is smaller than a predetermined threshold value and/or that the erosion value is set to a maximal value if the distance to the reference axis is greater than the predetermined threshold value or a further predetermined threshold value.

Using threshold values advantageously further improves the adaption of the erosion to thin parts of the printing object. This, in turn, allows to further improve a reproduction quality.

It is further possible that the erosion value can additionally be determined as a function of one or more tonal value(s) or as a function of one more printing material(s) assigned to the selected surface voxel or as a function of a surface orientation in the selected surface voxel. A tonal value can e.g. be c-, m-, y-, k-value within a CMYK-vector defining a set printing material ratio of a selected voxel, wherein said ratio can e.g. be used for a subsequent halftoning process by which one or more printing material(s) is/are assigned to the selected voxel. It is e.g. possible that a predetermined assignment between different tonal values and erosion value changes is provided, wherein the erosion value is changed as a function of the erosion value change assigned to the erosion value, e.g. by adding the erosion value change to or subtracting it from the erosion value.

The erosion value can additionally be determined as a function of the surface orientation, in particular the surface normal, or as a function of a surface facing characteristic, i.e. whether the surface is facing upwards or downwards during printing. It is e.g. possible that a predetermined assignment between different surface orientations or surface facing characteristic and erosion value changes is provided, wherein the erosion value is changed as a function of the erosion value change assigned to the erosion value, e.g. by adding the erosion value change to or subtracting it from the erosion value.

This advantageously allows to adaptively correct tonal or surface-orientation dependent thickening effects by the printing process and thus to improve the geometric accuracy of the final print.

In general, the proposed method advantageously allows the production or prototyping of functional parts for which smooth surfaces and geometric accuracy is crucial, e.g. medical products such as eye prosthetics or dental prosthetics as well as products used in entertainment such as movies or gaming.

Further proposed is a computer program product with a computer program, wherein the computer program comprises software means for the execution of one, multiple or all steps of the method for three-dimensional printing according to one of the embodiments described in this disclosure if the computer program is executed by or in a computer or an automation system.

Further described is a program which, when running on a computer or in an automation system, causes the computer or the automation system to perform one or more or all steps of the method for three-dimensional printing according to one of the embodiments described in this disclosure and/or to a program storage medium on which the program is stored (in particular in a non-transitory form) and/or to a computer comprising said program storage medium and/or to a (physical, for example electrical, for example technically generated) signal wave, for example a digital signal wave, carrying information which represents the program, for example the aforementioned program, which for example comprises code means which are adapted to perform any or all of the method steps described herein.

This means that the method in accordance with the invention is for example a computer implemented method. For example, all the steps or merely some of the steps (i.e. less than the total number of steps) of the method in accordance with the invention can be executed by a computer. An embodiment of the computer implemented method is a use of the computer for performing a data processing method. The computer for example comprises at least one microcontroller or processor and for example at least one memory in order to (technically) process the data, for example electronically and/or optically. The processor being for example made of a substance or composition which is a semiconductor, for example at least partly n- and/or p-doped semiconductor, for example at least one of II-, III-, IV-, V-, VI-semiconductor material, for example (doped) silicon and/or gallium arsenide. The calculating steps described are for example performed by a computer. Determining steps or calculating steps are for example steps of determining data within the framework of the technical method, for example within the framework of a program. A computer is for example any kind of data processing device, for example electronic data processing device. A computer can be a device which is generally thought of as such, for example desktop PCs, notebooks, netbooks, etc., but can also be any programmable apparatus, such as for example a mobile phone or an embedded processor. A computer can for example comprise a system (network) of "sub-computers", wherein each sub-computer represents a computer in its own right.

Steps executed or performed by a computer or an automation system can in particular be the dithering step and/or the erosion step and/or a control step by which the printing process is controlled.

The computer program product advantageously allows to perform a method for three-dimensional printing according to one of the embodiments described in this disclosure for which technical advantages have been outlined before.

Further proposed is a 3D printing device, wherein the printing device comprises at least one means for printing a printing material and at least one control unit. The 3D printing device is configured to perform a method for three-dimensional printing according to one of the embodiments described in this disclosure. The control unit, which can be provided by at least one microcontroller or at least one integrated circuit, can be configured to perform the dithering step, the erosion step and/or a control step. The control unit can have an interface for receiving input data generated in a modelling step. The 3D printing device advantageously allows to perform a method for three-dimensional printing according to one of the embodiments described in this disclosure for which technical advantages have been outlined before.

Further described is a printing object, wherein the printing object is obtained or obtainable or directly obtained by a method for three-dimensional joint color and translucency printing according to one of the embodiments disclosed in this disclosure.-The printing objects obtained by the proposed method with a dithering step possess a smoother surface without or with reduced quantization-error induced staircasing artifacts in comparison to printing objects obtained without the proposed dithering step. As outlined above, such quantization-induced artifacts can be determined by measuring the surface of the printing object, determining the deviation between the printed surface and the set surface and identifying the quantization-induced artifacts as deviations with a low frequency portion in all spatial directions.

It is possible that the computational time required to generate control data for the printing process with the dithering step (i.e. according to the invention) is equal to or is not more than 10% higher than the computational time required to generate control data for the printing process without the proposed dithering step for the same input data and using the same computational unit(s), i.e. under the same underlying conditions.

The printing objects obtained by the proposed method with an erosion step possess an improved geometric accuracy without or with reduced thickened structures in comparison to printing objects obtained without the proposed erosion step. The thickening effect can e.g. be measured by printing cylinders with a longitudinal axis being orthogonal to the surface of the z-slices of the printing object and determining the deviation between the diameter of the printed cylinder and the set diameter (which can e.g. be determined based on the digital model of the cylinder). The diameter of the printed cylinder can be determined by a caliper or by other metrology devices for measurement.

Also described is a printing object for which the model data is chosen such that a distinct quantization error is present at print resolution and wherein these quantization errors are removed or strongly reduced, in particular regardless of their orientation, in the printing object after the printing step.

The invention will be described with reference to the attached figures. The figures show:
- Figure 1:: A schematic block diagram of the 3D printer,
- Figure 2:: A schematic flow diagram of a printing method according to the invention,
- Figure 3:: A schematic flow diagram of a printing method according to another embodiment of the invention,
- Figure 4:: A schematic representation of a voxel grid without dithering,
- Figure 5:: A schematic representation of material coverage without dithering,
- Figure 6:: A schematic representation of a voxel grid with dithering,
- Figure 7:: A schematic representation of material coverage with dithering,
- Figure 8:: A schematic representation of a z-slice,
- Figure 9:: A schematic representation of an erosion function.

In the following, corresponding reference numerals denote elements with the same or similar technical features.

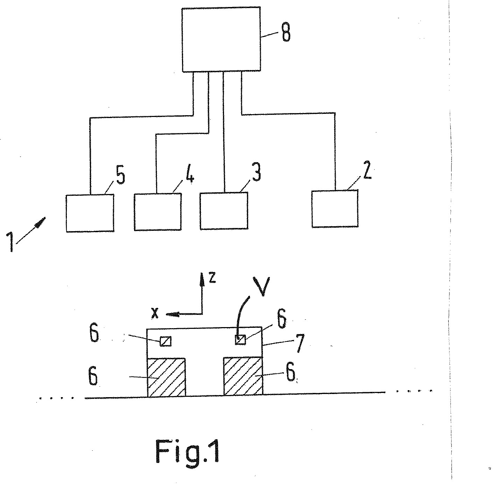

Figure 1 shows a schematic representation of a three-dimensional printing device 1. The printing device 1 comprises a print heads 2, 3, 4, 5. The print heads 2, 3, 4, 5 can be used for printing materials with different colors and/or translucencies as well as support material 6. A printing device 1, however, is not required to have multiple print heads 2, 3, 4, 5 as only one print head is sufficient for carrying out the method according to the invention. Further shown is a printing object 7 which is T-shaped and which consists of printing material.

Indicated is a printing space or build space reference coordinate system with a longitudinal axis which is also referred to as x-axis. An arrowhead indicates an x-direction. Further indicated is a vertical axis which is also referred to as z-axis, wherein an arrowhead indicates a vertical direction or z-direction. The vertical axis is pointing upwards. A lateral axis which is also referred to as y-axis can be oriented perpendicular the x-axis and the z-axis, wherein the axes can provide a right-hand Cartesian coordinate system.

Further shown is that the printing device 1 comprises a control unit 8 for controlling a movement and/or an operation of the print heads 2, 3, 4, 5. The control unit 8 can comprise or be provided by at least one microcontroller or by at least one integrated circuit.

In particular, the print heads 2, 3, 4, 5 can be controlled such that the printing materials are arranged in voxels V, wherein for the sake of illustration, only one voxel V is denoted by a reference sign.

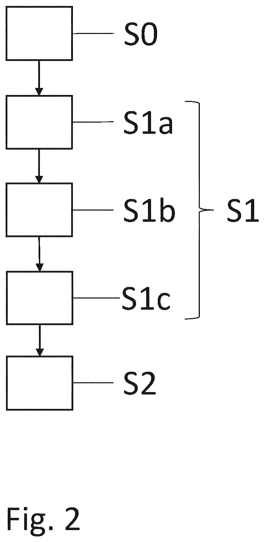

Fig. 2 shows a schematic flow diagram of a method for 3D printing according to the invention. In a modeling step S0 which is not necessarily part of the proposed method, input data is generated which encodes reproduction information on the printing object 7, e.g. shape information, color information and/or translucency information.

The method comprises a dithering step S1. The dithering step S1 is performed to determine a model with a dithered, modified surface in comparison to the model provided by the input data. In a first substep S1a of the dithering step S1, a set surface 9 of the printing object 7 is determined, in particular a set surface of the model provided by the input data. In a second substep S1b, a spatially high-frequent dithering signal is provided. In a third substep S1c, the set surface 9 is modified as a function of the dithering signal and a modified, dithered surface is determined.

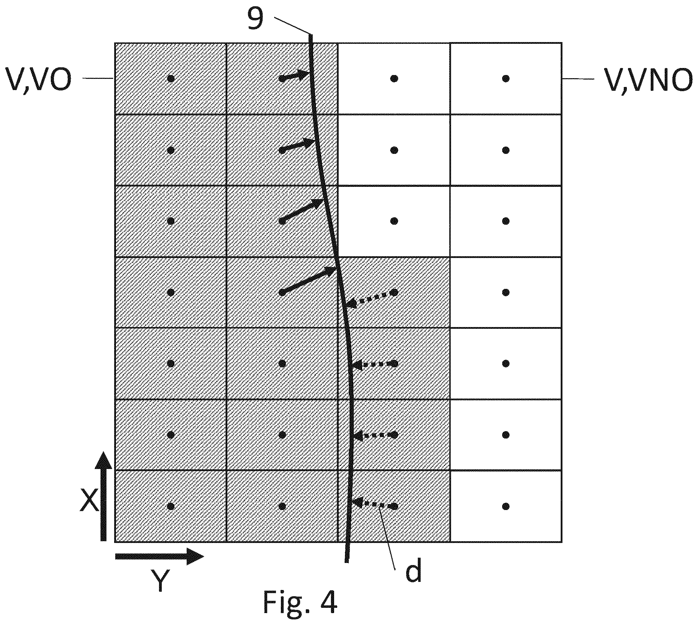

Modification of the set surface can e.g. be performed by determining a voxel grid of a bounding box of the printing object 7 which comprises voxels V and to determine a voxel-specific surface distance information (see e.g. Fig. 4) for each voxel of the bounding box which represents the distance d between the selected voxel V and the set surface 9. Then, the surface distance information (which can e.g. be the distance d itself) is modified as a function of the dithering signal. In particular, the distance d can be determined as a signed distance and a dithering signal value which can take positive or negative values is added to the distance d. In other words, a distance d to the surface 9 is changed for each selected voxel V.

Then, the dithered surface can be determined depending on the modified surface distance information, e.g. as a section of zero crossings defined by the modified surface distance information. Said section can e.g. be determined by interpolating or extrapolating the modified surface distance information.

Alternatively, a classification of voxels V of the bounding box into object voxels VO and non-object voxels VNO can be changed or updated based on the modified distance information. It is e.g. possible to perform a threshold-based approach, wherein voxels V with a distance d smaller than or equal to a distance threshold value are classified as object voxels VO and voxels V with a distance larger than the threshold value are classified as non-object voxels VNO.

The dithering signal is preferably provided by a three-dimensional dithering matrix wherein the entry values of the matrix provide a spatially high-frequent signal along each direction through the matrix. In this case, the dithering matrix can have the same voxel size as the bounding box and each element of the dithering matrix V is assigned to one voxel V of the bounding box. In particular, a matrix element with an ordinal number vector i, j, k can be assigned to the voxel V with the same ordinal number vector, wherein i can denote an ordinal number along the x-axis, j can denote an ordinal number along the y-axis, and k can denote an ordinal number along the z-axis. In this case, the value of the matrix element can provide the dithering signal value for the distance d of a selected voxel V. Preferably, however, the value of the matrix element which is assigned to the closest surface voxel of a selected voxel V can provide the dithering signal value for the distance d of the selected voxel V.

In a printing step S2, the printing object 7 is printed with the dithered surface. In other words, the model data which is modified by the dithering step S1 provides the input data for the printing step S2.

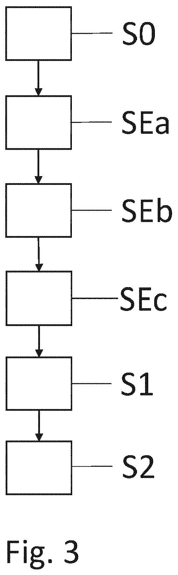

Fig. 3 shows a schematic flow diagram of a method for 3D printing according to another embodiment of the invention. In addition to the steps S0, S1, S2 of the method according to the embodiment shown in Fig. 1, the method further comprises an erosion step SE.

The erosion step SE is performed to determine a model with an eroded, modified surface in comparison to the model provided by the input data. The erosion step SE is performed before the dithering step S1. This means that the eroded surface provides the set surface for the dithering step S1, i.e. the surface which is modified as a function of the dithering signal.

In a first substep SEa of the erosion step SE, a set surface 9 of the printing object 7 is determined, in particular a set surface of the model provided by the input data. In a second substep SEb, an erosion value is provided. In a third substep SEc, the set surface 9 is modified as a function of the erosion value and a modified, eroded surface is determined.

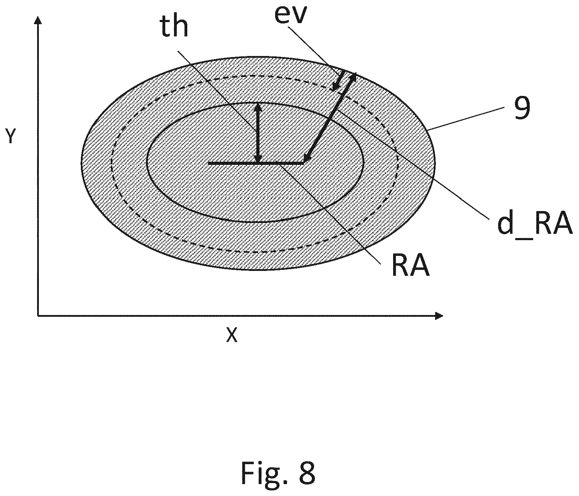

Modification of the set surface 9 can e.g. be performed by determining a voxel grid of a bounding box of the printing object 7 which comprises voxels V and to determine a voxel-specific surface distance information (see e.g. Fig. 4) for each voxel of the bounding box which represents the distance d between the selected voxel V and the set surface 9. This distance information can e.g. be determined in a selected z-slice 11 (see e.g. Fig. 8) or for each voxel V in the three-dimensional bounding box.

Then, the surface distance information (which can e.g. be the distance d itself) is modified as a function of the erosion value. In particular, the distance d can be determined as a signed distance and an erosion value which can take negative values is added to the distance d. In other words, a distance d to the surface is changed for each selected voxel V.

Then, as outlined before with respect to the dithering step S1, the eroded surface can be determined depending on the modified surface distance information, e.g. as a section of zero crossings defined by the modified surface distance information, or a classification of voxels V of the bounding box into object voxels VO and non-object voxels VNO can be changed or updated based on the modified distance information.

Preferably, the erosion value is determined for a selected voxel V, in particular for each surface voxel of a selected z-slice 11, as a function of a voxel-specific distance d_RA to a reference axis RA, wherein the reference axis RA is a medial axis which denotes a set of object points which have more than one closest point on the surface 9. In particular, the medial axis denotes a set of object points in the two-dimensional z-slice 11 which have more than one closest point on the two-dimensional surface 8 in the z-slice 11.

The voxel-specific distance d_RA to the reference axis RA for a surface voxel is in particular determined as a function of the distance between the voxel center and the reference axis RA and the distance between the voxel center and the surface 8 along the surface normal.

The erosion value and the distance d_RA to the reference axis RA can be functionally related such that they are positively correlated for at least one interval of distance values.

Fig. 4 shows schematic representation of a voxel grid without dithering. Shown are voxels V in a z-slice 11, wherein - for the sake of illustration - only one voxel V is denoted by a reference numeral. Crosshatched voxels V represent voxels which are classified as object voxels VO, i.e. voxels V in which printing material will be arranged in the printing process. Non-crosshatched voxels V represent voxels V which are classified as non-object voxels VNO, i.e. voxels V in which no printing material will be arranged in the printing process.

Further shown is a set surface 9 of the printing object 7 and a set course of said surface 9 in the reference coordinate system. Voxels V which are intersected by the surface course are classified as surface voxels.

For all surface voxels, a distance d between the respective voxel V and the set surface 9 is shown. The distance d is a signed distance, wherein a solid line represents a negative distance value and a dotted line a positive value (or vice versa).

It can be seen that due to the voxel resolution and the course of the set surface 9, the course of the voxels V classified as surface voxels features a step, i.e. has a step-like course. This step provides a quantization error and generates a staircasing artifact in the printing object 7.

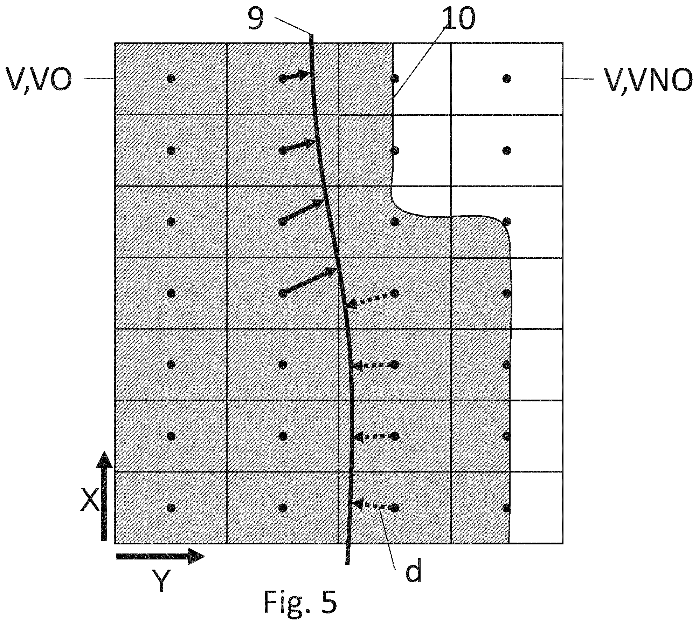

Figure 5 shows a schematic representation of printing material coverage if the printing object 7 is printed according to the voxel classification shown in Fig. 4. A crosshatched area represents the printing object 7, wherein a non-crosshatched area represents an area outside the printing object 7.

In comparison to the voxels shown in Fig. 4, the arrangement of printing material in a selected voxel V will lead to the effect that excessive printing material will also be arranged in neighbouring voxels V, in particular in voxels V which have been classified as non-object voxels VNO.

Indicated is a printed surface 10 of the printing object 7, i.e. a surface of the printing object 7 which is provided by the printing process. It can be seen the surface course of the printed surface 10 also features a step, i.e. has a step-like course. Due to this step like course, in particular due to a spatial course along the step in a direction parallel to the z-axis, i.e. perpendicular to the drawing plane, the printed surface 10 will feature low spatial frequencies. Also, the step like course parallel to the y-axis shown in Fig. 5 will provide a spectrum with a low spatial frequency portion as a step is typically composed of low frequency components.

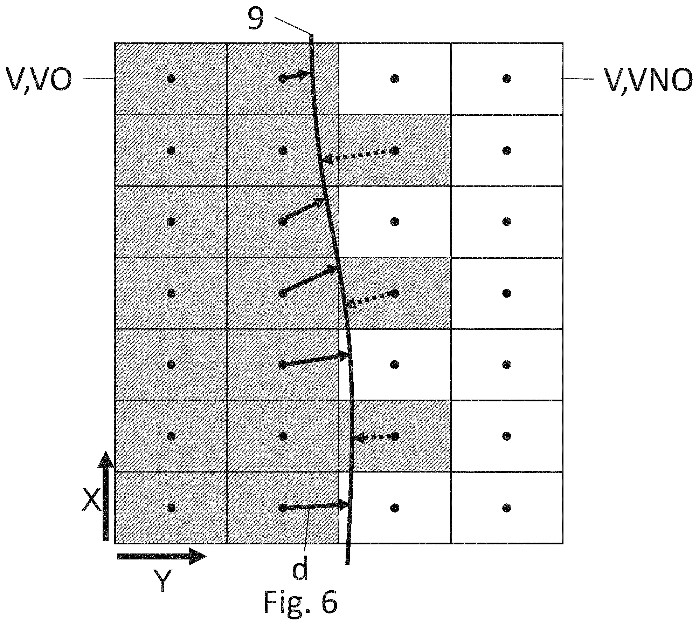

Fig. 6 shows schematic representation of a voxel grid after a dithering step S1 has been performed. Shown is a set surface 9, i.e. an undithered surface, of the printing object 7 and a set course of said surface 9 in the reference coordinate system. Further shown is a distance d between the respective voxel V and the set surface 9 after a dithering step S1 has been performed. Voxels V which are intersected by the dithered surface (not shown in Fig. 6) are classified as surface voxels. It can be seen that due to the voxel resolution and the course of the set surface 9, the surface is dithered.

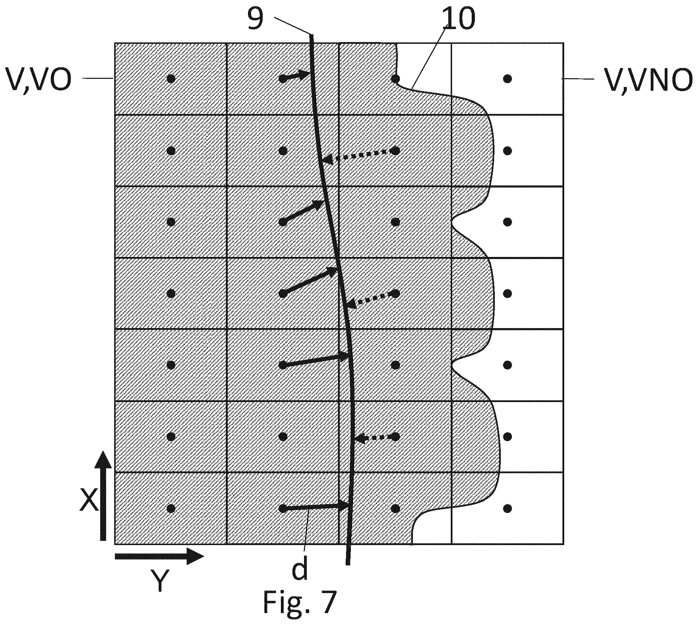

Figure 7 shows a schematic representation of printing material coverage if the printing object 7 is printed according to the voxel classification shown in Fig. 6. Also indicated is a printed surface 10 of the printing object 7 and a surface course of the printing object 7 which is provided by the printing process. It can be seen that the surface course of the printed surface 10 does not feature a step like the embodiment shown in Fig. 5 but has a corrugated course. In particular, a low frequency portion of the spectrum of spatial frequencies of the surface course shown in Fig. 7 will be smaller than a low frequency portion of the spectrum of spatial frequencies of the surface course shown in Fig. 5.

Figure 8 shows a schematic representation of a z-slice 11 of a printing object 7. Indicated are a longitudinal and a lateral axis x, y of the reference coordinate system and a set surface 9 of the printing object 7.

Further shown is a reference axis RA of the two-dimensional cross section of the printing object 7 in the plane defined by the selected z-slice 11, a distance threshold value th, an erosion value ev and a distance d_RA between the reference axis 12 and the set surface 9.

The reference axis RA is a medial axis of the two-dimensional representation of the printing object 7 in the selected z-slice 11. The distance d_RA denotes a minimal distance for a selected point on the set surface 9 to the reference axis RA. The erosion value ev is determined as an output value of an erosion function which maps an input value to the output value. To determine the erosion value ev for a selected point on the set surface 9, the distance d_RA is determined and mapped to the erosion value ev. The functional relationship can provide a positive correlation between the erosion value and the distance d_RA for at least one interval of distance values. In particular, the functional relationship can feature a ramped-shaped course or a step-like course for at least one interval of distance values.

In a voxel based representation of the z-slice 11, the input value for each surface voxel can be determined as the sum of a distance of a voxel center to the reference axis RA and the distance of the voxel center to the set surface 9 along a surface normal which intersects the voxel center. Surface voxels in the selected z-slice 11 of a voxel-based representation of the printing object 7 are voxels which are intersected by the set surface 9.

As outlined before, the erosion value ev is then used to modify the set surface 9 in order to provide an eroded surface.

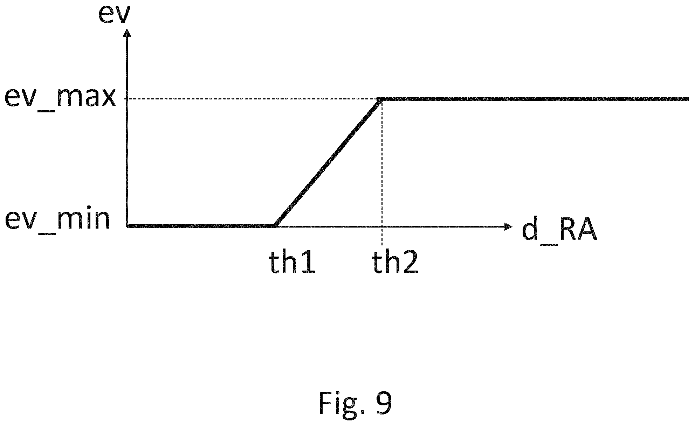

Figure 9 shows a schematic representation of an erosion function. Indicated is an input value which is a value of distance d_RA of a point on the set surface 9 to the reference axis 12. The output value is the erosion value ev. Further indicated are distance threshold values th1, th2. For distance values d_RA which are smaller than a first threshold value th1, the erosion value ev is determined as a constant minimal erosion value ev_min which can e.g. be zero. For distance values d_RA which are larger than a second threshold value th2, the erosion value ev is determined as a constant maximal erosion value ev_max. The first distance threshold value th1 is smaller than the second distance threshold value th2. For distance values d_RA between the first and the second distance threshold value th1, th2, the erosion value ev increases with an increasing distance value, e.g. in a linear manner. It is, however, also possible that an alternative relationship between the distance value d and the erosion value ev is applied, e.g. a relationship by which the erosion value ev is positively correlated with the distance value d for at least an interval of distance values.

## Claims

1. A method for three-dimensional printing using printing and support material, comprising the steps of
• dithering a set surface (9) of the printing object (7) to provide a modified dithered surface, the printing object (7) being the object to be printed,
• printing the printing object (7) with the dithered surface,
wherein the computer-implemented dithering step (S1) comprises
• determining the set surface (9) of the printing object (7) as a set surface of a model of the printing object (7),
• providing a spatially high-frequent dithering signal with a steady component being zero or not higher than a predetermined threshold,
• modifying the set surface (9) of the model as a function of the dithering signal to provide the modified dithered surface, wherein the location of points on the set surface (9) are changed as a function of the dithering signal.

2. The method according to claim 1, **characterized in that** the dithering step (S1) further comprises
• determining a voxel grid of a bounding box of the printing object (7) or a portion thereof,
• determining a voxel-specific surface distance information for each voxel (V) of the bounding box or for selected voxels (V) of the bounding box, wherein the voxel-specific surface distance information represents a distance (d) between the voxel (V) and the set surface (9),
• modifying the surface distance information as a function of the dithering signal,
• determining the modified surface depending on the modified surface distance information or classifying object voxels (VO) and non-object voxels (VNO) based on the modified surface distance information.

3. The method according to claim 2, **characterized in that** the dithering step (S1) further comprises
• providing a three-dimensional dithering mask,
• determining, for each voxel (V) of the bounding box or for selected voxels (V) of the bounding box, a voxel-specific distance modifying value as a function of at least one entry of the dithering mask, and modifying the voxel-specific distance information as a function of the distance modifying value.

4. The method according to claim 3, **characterized in that** one mask element is assigned to each voxel (V) of the bounding box or to the selected voxels (V) of the bounding box, wherein the voxel-specific distance modifying value for a selected voxel is determined as the value of the mask element which is assigned to the selected voxel (V) or as the value of the mask element which is assigned to the nearest surface voxel of the selected voxel (V).

5. The method according to claim 3, **characterized in that** one mask element is assigned to each voxel (V) of the bounding box or to the selected voxels (V) of the bounding box, wherein the voxel-specific distance modifying value for a selected voxel is determined as a projection value resulting from one or multiple projection(s) of the values of the mask elements to the selected voxel (V).

6. The method according to one of the claims 3 to 5, characterized that the voxel-specific distance modifying value is scaled by a scaling factor which is determined as a function of a voxel size and/or that the voxel-specific distance modifying value is scaled by a scaling factor which is determined as a function of a selected printer.

7. The method according to claim 1, **characterized in that** the dithering step (S1) further comprises
• determining a voxel grid of a bounding box of the printing object (7) or a portion thereof,
• classifying voxels (V) which are intersected by the set surface (9) as surface voxels,
• modifying the surface voxel classification as a function of the dithering signal.

8. The method according to one of the preceding claims, **characterized in that** the method further comprises the step of
• eroding the surface of the printing object (7), wherein an erosion step is performed for all z-slices or a subset of all z-slices of the printing object (7).

9. The method according to claim 8, **characterized in that** the erosion step (SE) comprises
• determining a set surface (9) of the printing object in a selected z-slice (11),
• determining a reference axis (RA) as a medial axis of the surface or a subset thereof,
• determining, for each or selected points of the surface (9), a distance (d_RA) to the reference axis (RA) and an erosion value (ev) as a function of said distance (d_RA),
• modifying the surface depending on the erosion value (ev) by changing the voxel-specific distance as a function of the erosion value (ev) and determining an eroded surface depending on the modified voxel-specific distances.

10. The method according to claim 9, **characterized in that** the erosion step comprises
• determining, at least for each surface voxel of the selected z-slice (11), a voxel-specific distance (d_RA) to the reference axis (RA) and an erosion value (ev) as a function of said distance (d_RA),
• modifying the voxel-specific surface distance information as a function of the erosion value (ev),
• determining the modified surface depending on the modified surface distance information or classifying object voxels (VO) and non-object voxels (VNO) based on the modified surface distance information.

11. The method according to claim 10, **characterized in that** the voxel-specific distance (d_RA) to the reference axis is determined as a function of the distance between the voxel center and the reference axis (RA) and the distance between the voxel center and the surface (9) along the surface normal.

12. The method according to one of the claims 9 to 11, **characterized in that** the erosion value (ev) and the distance (d_RA) to the reference axis (RA) are positively correlated for at least one interval of distance values.

13. The method according to one of the claims 9 to 12, **characterized in that** the erosion value (ev) is set to a minimal value (ev_min) if the distance (d_RA) to the reference axis (RA) is smaller than a predetermined threshold value (th1) and/or that the erosion value (ev) is set to a maximal value (ev_max) if the distance (d_RA) to the reference axis (RA) is greater than the predetermined threshold value (th1) or a further predetermined threshold value (th2).

14. A 3D printing device (1), wherein the printing device (1) comprises at least one means for printing a printing material and at least one control unit (8), **characterized in that** the control unit (8) is configured to perform a method for three-dimensional printing according to one of the claims 1 to 13 and to control the means for printing accordingly.

15. A computer program product with a computer program, wherein the computer program comprises software means for the execution of at least the computer-implemented dithering step of the method for three-dimensional printing according to one of the claims 1 to 13 and the generation of control data used to control a printing process based on the data generated in the computer-implemented dithering step if the computer program is executed by or in an automation system.

## Patentansprüche

1. Verfahren zum dreidimensionalen Drucken unter Verwendung von Druck- und Stützmaterial, umfassend die folgenden Schritte:
• Dithering einer festgelegten Oberfläche (9) des Druckobjekts (7), um eine modifizierte, geditherte Oberfläche zu erzeugen, wobei das Druckobjekt (7) das zu druckende Objekt ist,
• Drucken des Druckobjekts (7) mit der geditherten Oberfläche,
wobei der computerimplementierte Dithering-Schritt (S1) umfasst:
• Bestimmen der festgelegten Oberfläche (9) des Druckobjekts (7) als festgelegte Oberfläche eines Modells des Druckobjekts (7),
• Bereitstellen eines räumlich hochfrequenten Dithering-Signals mit einer stationären Komponente, die null oder nicht höher als ein vorbestimmter Schwellenwert ist,
• Modifizieren der festgelegten Oberfläche (9) des Modells als Funktion des Dithering-Signals, um die modifizierte geditherte Oberfläche bereitzustellen, wobei die Position von Punkten auf der festgelegten Oberfläche (9) als Funktion des Dithering-Signals verändert wird.

2. Verfahren nach Anspruch 1, **dadurch gekennzeichnet, dass** der Dithering-Schritt (S1) ferner umfasst:
• Ermitteln eines Voxelgitters eines Begrenzungsrahmens des Druckobjekts (7) oder eines Teils davon,
• Ermitteln einer voxelspezifischen Oberflächenabstandsinformation für jeden Voxel (V) des Begrenzungsrahmens oder für ausgewählte Voxel (V) des Begrenzungsrahmens, wobei die voxelspezifische Oberflächenabstandsinformation einen Abstand (d) zwischen dem Voxel (V) und der festgelegten Oberfläche (9) darstellt,
• Modifizieren der Oberflächenabstandsinformationen als Funktion des Dithering-Signals,
• Bestimmen der modifizierten Oberfläche in Abhängigkeit von den modifizierten Oberflächenabstandsinformationen oder Klassifizieren von Objektvoxeln (VO) und Nicht-Objektvoxeln (VNO) auf der Grundlage der modifizierten Oberflächenabstandsinformationen.

3. Verfahren nach Anspruch 2, **dadurch gekennzeichnet, dass** der Dithering-Schritt (S1) ferner umfasst
• Bereitstellen einer dreidimensionalen Dithering-Maske,
• Bestimmen eines voxelspezifischen Abstandsmodifikationswerts für jeden Voxel (V) des Begrenzungsrahmens oder für ausgewählte Voxel (V) des Begrenzungsrahmens als Funktion mindestens eines Eintrags der Dithering-Maske und Modifizieren der voxelspezifischen Abstandsinformation als Funktion des Abstandsmodifikationswerts.

4. Verfahren nach Anspruch 3, **dadurch gekennzeichnet, dass** jedem Voxel (V) des Begrenzungsrahmens oder den ausgewählten Voxeln (V) des Begrenzungsrahmens ein Maskenelement zugeordnet wird, wobei der voxelspezifische Abstandsmodifikationswert für ein ausgewähltes Voxel als der Wert des Maskenelements bestimmt wird, das dem ausgewählten Voxel (V) zugeordnet ist, oder als der Wert des Maskenelements, das dem nächstgelegenen Oberflächenvoxel des ausgewählten Voxels (V) zugeordnet ist.

5. Verfahren nach Anspruch 3, **dadurch gekennzeichnet, dass** jedem Voxel (V) des Begrenzungsrahmens oder den ausgewählten Voxeln (V) des Begrenzungsrahmens ein Maskenelement zugeordnet wird, wobei der voxelspezifische Abstandsmodifikationswert für ein ausgewähltes Voxel als Projektionswert bestimmt wird, der sich aus einer oder mehreren Projektionen der Werte der Maskenelemente auf das ausgewählte Voxel (V) ergibt.

6. Verfahren nach einem der Ansprüche 3 bis 5, **dadurch gekennzeichnet, dass** der voxelspezifische Abstandsmodifikationswert mit einem Skalierungsfaktor skaliert wird, der als Funktion einer Voxelgröße bestimmt wird, und/oder dass der voxelspezifische Abstandsmodifikationswert mit einem Skalierungsfaktor skaliert wird, der als Funktion eines ausgewählten Druckers bestimmt wird.

7. Verfahren nach Anspruch 1, **dadurch gekennzeichnet, dass** der Dithering-Schritt (S1) ferner umfasst
• Ermitteln eines Voxelgitters eines Begrenzungsrahmens des Druckobjekts (7) oder eines Teils davon,
• Klassifizieren von Voxeln (V), die von der festgelegten Oberfläche (9) geschnitten werden, als Oberflächenvoxeln,
• Modifizieren der Oberflächenvoxel-Klassifizierung in Abhängigkeit vom Dithering-Signal.

8. Verfahren nach einem der vorstehenden Ansprüche, **dadurch gekennzeichnet, dass** das Verfahren ferner den Schritt umfasst,
• Erodieren der Oberfläche des Druckobjekts (7), wobei ein Erodierungsschritt für alle Z-Schichten oder eine Teilmenge aller Z-Schichten des Druckobjekts (7) durchgeführt wird.

9. Verfahren nach Anspruch 8, **dadurch gekennzeichnet, dass** der Erodierungsschritt (SE) umfasst:
• Bestimmen einer Oberflächenmenge (9) des Druckobjekts in einer ausgewählten Z-Schicht (11),
• Bestimmen einer Referenzachse (RA) als Mittelachse der Oberfläche oder einer Teilmenge davon,
• für jeden oder ausgewählte Punkte der Oberfläche (9), bestimmen eines Abstands (d_RA) zur Referenzachse (RA) und eines Erosionswerts (ev) als Funktion des genannten Abstands (d_RA),
• Modifizieren der Oberfläche in Abhängigkeit vom Erosionswert (ev) durch Ändern des voxelspezifischen Abstands als Funktion des Erosionswerts (ev) und Bestimmen einer erodierten Oberfläche in Abhängigkeit von den modifizierten voxelspezifischen Abständen.

10. Verfahren nach Anspruch 9, **dadurch gekennzeichnet, dass** der Erosionsschritt umfasst:
• zumindest für jedes Oberflächenvoxel der ausgewählten Z-Schicht (11), ermitteln eines voxelspezifischen Abstands (d_RA) zur Referenzachse (RA) und eines Erosionswerts (ev) als Funktion des genannten Abstands (d_RA),
• Modifizieren der voxelspezifischen Oberflächenabstandsinformationen als Funktion des Erosionswerts (ev),
• Bestimmen der modifizierten Oberfläche in Abhängigkeit von den modifizierten Oberflächenabstandsinformationen oder Klassifizieren von Objektvoxeln (VO) und Nicht-Objektvoxeln (VNO) auf der Grundlage der modifizierten Oberflächenabstandsinformationen.

11. Verfahren nach Anspruch 10, **dadurch gekennzeichnet, dass** der voxelspezifische Abstand (d_RA) zur Referenzachse als Funktion des Abstands zwischen dem Voxelmittelpunkt und der Referenzachse (RA) und des Abstands zwischen dem Voxelmittelpunkt und der Oberfläche (9) entlang der Oberflächennormalen bestimmt wird.

12. Verfahren nach einem der Ansprüche 9 bis 11, **dadurch gekennzeichnet, dass** der Erosionswert (ev) und der Abstand (d_RA) zur Referenzachse (RA) für mindestens ein Intervall von Abstandswerten positiv korrelieren.

13. Verfahren nach einem der Ansprüche 9 bis 12, **dadurch gekennzeichnet, dass** der Erosionswert (ev) auf einen Minimalwert (ev_min) gesetzt wird, wenn der Abstand (d_RA) zur Referenzachse (RA) kleiner ist als ein vorbestimmter Schwellenwert (th1), und/oder dass der Erosionswert (ev) auf einen Maximalwert (ev_max) gesetzt wird, wenn der Abstand (d_RA) zur Referenzachse (RA) größer ist als der vorbestimmte Schwellenwert (th1) oder ein weiterer vorbestimmter Schwellenwert (th2).

14. Eine 3D-Druckvorrichtung (1), wobei die Druckvorrichtung (1) mindestens ein Mittel zum Drucken eines Druckmaterials und mindestens eine Steuereinheit (8) umfasst, **dadurch gekennzeichnet, dass** die Steuereinheit (8) dazu konfiguriert ist, ein Verfahren zum dreidimensionalen Drucken gemäß einem der Ansprüche 1 bis 13 auszuführen und das Mittel zum Drucken entsprechend zu steuern.

15. Ein Computerprogrammprodukt mit einem Computerprogramm, wobei das Computerprogramm Softwaremittel zur Ausführung zumindest des computerimplementierten Dithering-Schritts des Verfahrens zum dreidimensionalen Drucken gemäß einem der Ansprüche 1 bis 13 und zur Erzeugung von Steuerdaten umfasst, die zur Steuerung eines Druckprozesses auf der Grundlage der im computerimplementierten Dithering-Schritt erzeugten Daten verwendet werden, wenn das Computerprogramm von oder in einem Automatisierungssystem ausgeführt wird.

## Revendications

1. Procédé d'impression tridimensionnelle utilisant un matériau d'impression et un matériau de support, comprenant les étapes consistant à
• appliquer un tramage à une surface définie (9) de l'objet à imprimer (7) afin d'obtenir une surface tramée modifiée, l'objet à imprimer (7) étant l'objet qui doit être imprimé,
• imprimer l'objet à imprimer (7) avec la surface tramée,
dans lequel l'étape de tramage (S1) mise en œuvre par ordinateur comprend
• déterminer la surface définie (9) de l'objet à imprimer (7) en tant que une surface définie d'un modèle de l'objet à imprimer (7),
• fournir un signal de tramage à haute fréquence spatiale dont une composante constante est nulle ou n'est pas supérieure à un seuil prédéterminé,
• modifier la surface définie (9) du modèle en fonction du signal de tramage afin de fournir la surface tramée modifiée, dans lequel l'emplacement des points sur la surface définie (9) est modifié en fonction du signal de tramage.

2. Procédé selon la revendication 1, **caractérisé en ce que** l'étape de tramage (S1) comprend en outre :
• déterminer une grille de voxels d'une boîte englobante de l'objet à imprimer (7) ou d'une partie de celui-ci,
• déterminer une information de distance de surface spécifique au voxel pour chaque voxel (V) de la boîte englobante ou pour des voxels (V) sélectionnés de la boîte englobante, ladite information de distance de surface spécifique au voxel représentant une distance (d) entre le voxel (V) et la surface définie (9),
• modifier les informations de distance de surface en fonction du signal de tramage,
• déterminer la surface modifiée en fonction des informations de distance de surface modifiées ou classifier des voxels d'objet (VO) et des voxels non-objet (VNO) sur la base des informations de distance de surface modifiées.

3. Procédé selon la revendication 2, **caractérisé en ce que** l'étape de tramage (S1) comprend en outre
• fournir un masque de tramage tridimensionnel,
• déterminer, pour chaque voxel (V) de la boîte englobante ou pour des voxels (V) sélectionnés de la boîte englobante, une valeur de modification de distance spécifique au voxel en fonction d'au moins une entrée du masque de tramage, et modifier l'information de distance spécifique au voxel en fonction de la valeur de modification de distance.

4. Procédé selon la revendication 3, **caractérisé en ce qu'**un élément de masque est attribué à chaque voxel (V) de la boîte englobante ou aux voxels (V) sélectionnés de la boîte englobante, la valeur de modification de distance spécifique au voxel pour un voxel sélectionné étant déterminée comme étant la valeur de l'élément de masque attribué au voxel sélectionné (V) ou comme étant la valeur de l'élément de masque attribué au voxel de surface le plus proche du voxel sélectionné (V).

5. Procédé selon la revendication 3, **caractérisé en ce qu'**un élément de masque est attribué à chaque voxel (V) de la boîte englobante ou aux voxels sélectionnés (V) de la boîte englobante, la valeur de modification de distance spécifique au voxel pour un voxel sélectionné étant déterminée comme étant une valeur de projection résultant d'une ou de plusieurs projections des valeurs des éléments de masque sur le voxel sélectionné (V).

6. Procédé selon l'une quelconque des revendications 3 à 5, **caractérisé en ce que** la valeur de modification de distance spécifique au voxel est mise à l'échelle par un facteur d'échelle déterminé en fonction de la taille de voxel et/ou **en ce que** la valeur de modification de distance spécifique au voxel est mise à l'échelle par un facteur d'échelle déterminé en fonction d'une imprimante sélectionnée.

7. Procédé selon la revendication 1, **caractérisé en ce que** l'étape de tramage (S1) comprend en outre
• déterminer une grille de voxels d'une boîte englobante de l'objet à imprimer (7) ou d'une partie de celui-ci,
• classifier des voxels (V) qui sont intersectés par la surface définie (9) en tant que voxels de surface,
• modifier la classification des voxels de surface en fonction du signal de tramage.

8. Procédé selon l'une des revendications précédentes, **caractérisé en ce que** le procédé comprend en outre l'étape consistant à
• éroder la surface de l'objet à imprimer (7), dans lequel une étape d'érosion est effectuée pour toutes les tranches z ou un sous-ensemble de toutes les tranches z de l'objet à imprimer (7).

9. Procédé selon la revendication 8, **caractérisé en ce que** l'étape d'érosion (SE) comprend
• déterminer une surface définie (9) de l'objet à imprimer dans une tranche z sélectionnée (11),
• déterminer un axe de référence (RA) en tant qu'axe médian de la surface ou d'un sous-ensemble de celle-ci,
• déterminer, pour chaque point ou pour des points sélectionnés de la surface (9), une distance (d_RA) par rapport à l'axe de référence (RA) et une valeur d'érosion (ev) en fonction de ladite distance (d_RA),
• modifier la surface en fonction de la valeur d'érosion (ev) en modifiant la distance spécifique au voxel en fonction de la valeur d'érosion (ev) et déterminer une surface érodée en fonction des distances spécifiques aux voxels modifiées.

10. Procédé selon la revendication 9, **caractérisé en ce que** l'étape d'érosion comprend
• déterminer, au moins pour chaque voxel de surface de la tranche z sélectionnée (11), une distance spécifique au voxel (d_RA) par rapport à l'axe de référence (RA) et une valeur d'érosion (ev) en fonction de ladite distance (d_RA),
• modifier l'information de distance de surface spécifique au voxel en fonction de la valeur d'érosion (ev),
• déterminer la surface modifiée en fonction d'information de distance de surface modifiée ou classifier des voxels d'objet (VO) et des voxels non-objet (VNO) sur la base de l'information de distance de surface modifiée.

11. Procédé selon la revendication 10, **caractérisé en ce que** la distance spécifique au voxel (d_RA) par rapport à l'axe de référence est déterminée en fonction de la distance entre le centre du voxel et l'axe de référence (RA) et de la distance entre le centre du voxel et la surface (9) le long de la normale à la surface.

12. Procédé selon l'une des revendications 9 à 11, **caractérisé en ce que** la valeur d'érosion (ev) et la distance (d_RA) par rapport à l'axe de référence (RA) sont positivement corrélées pour au moins un intervalle de valeurs de distance.

13. Procédé selon l'une des revendications 9 à 12, **caractérisé en ce que** la valeur d'érosion (ev) est mise à une valeur minimale (ev_min) si la distance (d_RA) par rapport à l'axe de référence (RA) est inférieure à une valeur seuil prédéterminée (th1) et/ou que la valeur d'érosion (ev) est mise à une valeur maximale (ev_max) si la distance (d_RA) par rapport à l'axe de référence (RA) est supérieure à la valeur seuil prédéterminée (th1) ou à une autre valeur seuil prédéterminée (th2).

14. Dispositif d'impression 3D (1), dans lequel le dispositif d'impression (1) comprend au moins un moyen d'impression d'un matériau d'impression et au moins une unité de commande (8), **caractérisé en ce que** l'unité de commande (8) est configurée pour mettre en œuvre un procédé d'impression tridimensionnelle selon l'une des revendications 1 à 13 et pour commander le moyen d'impression de manière correspondante.

15. Produit logiciel comprenant un programme informatique, dans lequel le programme informatique comprend des moyens logiciels pour l'exécution d'au moins l'étape de tramage mise en œuvre par ordinateur du procédé d'impression tridimensionnelle selon l'une des revendications 1 à 13 et la génération de données de commande utilisées pour commander un processus d'impression sur la base des données générées lors de l'étape de tramage mise en œuvre par ordinateur si le programme informatique est exécuté par ou dans un système d'automatisation.
